# FASCICULE DE BREVET EUROPEEN

(11) **EP 2 961 634 B1**
(45) Date de publication et mention de la délivrance du brevet: **14.07.2021**
(21) Numéro de dépôt: 14718636.5
(22) Date de dépôt: 24.02.2014
(51) Int. Cl.: B62D 25/06, B32B 17/10, F21V 8/00, F21V 23/00, B60Q 3/208

(54) **RENFORT D'ORIFICE DE VITRAGE**
LOCHVERSTÄRKUNG EINER VERGLASUNG
REINFORCED OPENING OF A GLAZING

(30) Priorité: 26.02.2013 FR 1351662
(43) Date de publication de la demande: 06.01.2016
(73) Titulaire: SAINT-GOBAIN GLASS FRANCE, 92400 Courbevoie (FR)
(72) Inventeur: CLAUSE, Thomas, 60200 Compiegne (FR); HENNION, Alexandre, F-60280 Venette (FR)
(74) Mandataire: Saint-Gobain Recherche
(86) Numéro de dépôt international: PCT/FR2014/050381
(87) Numéro de publication internationale: WO 2014/131972

(56) Documents cités:
- EP-A1- 0 340 089
- WO-A1-2004/110102
- WO-A1-2008/125303
- WO-A1-2013/110885
- DE-B3- 10 313 664
- US-A1- 2006 272 227

## Description

L'invention concerne le domaine des vitrages munis d'un orifice et propose un moyen de renforcer ledit orifice.

Lors de leur utilisation, les vitrages sont soumis à des sollicitations thermiques ou mécaniques, en particulier lors de leur manipulation, auxquelles ils doivent résister pour éviter leur casse. Par exemple, les pare-brises d'un véhicule subissent des efforts mécaniques en leur périphérie lors de leur montage sur une carrosserie, que ce soit manuellement ou via un robot. Outre les contraintes mécaniques, le vitrage peut être soumis à des contraintes d'origine thermique, par exemple lors des cycles de dégivrage du pare-brise. Ces sollicitations aux bordures des vitrages, d'origine thermique ou mécanique, occasionnent des risques de casse. Afin de garantir une bonne résistance mécanique du vitrage, des contraintes de bord en compression sont générées lors de la fabrication du vitrage. Ces contraintes de bord sont connues et spécifiées dans le cahier des charges des constructeurs automobiles. Les bords considérés sont les bords extérieurs du vitrage mais aussi tout bord de partie évidée comme un orifice. Les bords des orifices sont des zones particulièrement sensibles des vitrages et il est de plus généralement difficile de leur donner les contraintes de bord nécessaires. La réalisation d'orifices aux bords particulièrement résistants est cependant souhaitée du fait que ces orifices ou leur proximité immédiate sert généralement au passage de câble ou à la fixation d'accessoires comme une antenne, un détecteur de pluie, un plafonnier, etc.

Les orifices créent deux problématiques pour la résistance aux sollicitations mécaniques : l'évidement crée un bord qui doit résister au chargement lors de l'utilisation de vitrage et l'évidement crée une zone de concentration de contraintes due à l'enlèvement local de matière. A cet égard, le vitrage est soumis en bordure de son orifice à diverses sollicitations mécaniques que sont celles permanentes dues à la fixation de l'accessoire, et celles transitoires survenant en particulier lors d'un choc sur l'accessoire. Par exemple, si pour le vitrage d'un haillon arrière d'un véhicule automobile, l'orifice est destiné à recevoir un essuie-glace, le bord de l'orifice doit résister à la fermeture du haillon.

La demande de brevet internationale WO2013/054059 enseigne un procédé de fabrication d'un vitrage feuilleté comprenant au moins deux substrats verriers et au moins une couche intercalaire en matériau polymère agencée entre les substrats, ledit procédé comprenant le bombage des substrats, le refroidissement contrôlé des substrats, l'assemblage des substrats verriers et de la couche intercalaire, ledit procédé comprenant le bombage des substrats, le refroidissement contrôlé des substrats, la formation d'un assemblage feuilleté comprenant les substrats et la couche intercalaire, la découpe de l'assemblage feuilleté dans toute son épaisseur selon une ligne sur une de ses faces principales, le refroidissement contrôlé comprenant un refroidissement contrôlé général et un refroidissement contrôlé local d'une zone comprenant la ligne de découpe, le refroidissement contrôlé local étant plus rapide que le refroidissement contrôlé général. Ce procédé confère des contraintes de bord aux orifices leur permettant de mieux résister aux sollicitations mécaniques et thermiques.

La demande de brevet internationale WO2013/054060 enseigne un toit de véhicule automobile comprenant deux bords longitudinaux et deux bords transversaux, symétrique par rapport à un plan longitudinal médian, consistant en un vitrage comprenant au moins une feuille de verre minéral, ladite feuille comprenant une ceinture de contraintes de bord en compression, ladite feuille comprenant au moins deux zones locales de contraintes en compression à l'intérieur de ladite ceinture et placées symétriquement par rapport audit plan de symétrie, chaque zone locale de contraintes en compression étant à moins de 30 cm d'un bord longitudinal.

La demande de brevet français FR2996803 (publiée le 18.04.2014) enseigne un procédé de fabrication d'un vitrage feuilleté bombé comprenant deux feuilles de verre, une couche intercalaire en matériau polymère agencée entre les feuilles de verre, et un conducteur électrique, ledit procédé comprenant le bombage thermique simultané des feuilles de verre à l'état apparié suivi de leur refroidissement puis de l'assemblage du vitrage feuilleté par collage des feuilles de verre à la couche intercalaire de part et d'autre de celle-ci, ledit refroidissement comprenant un refroidissement contrôlé des feuilles de verre à l'état apparié, le refroidissement contrôlé comprenant un refroidissement contrôlé général et un refroidissement contrôlé local d'une zone de découpe, le refroidissement contrôlé local étant plus rapide que le refroidissement contrôlé général, une découpe de l'une des feuilles de verre selon une ligne de découpe dans la zone de découpe pour former une zone évidée, le conducteur électrique étant placé entre les feuilles de verre et sortant du vitrage feuilleté par la zone évidée. Ce procédé confère des contraintes de bord aux orifices leur permettant de mieux résister aux sollicitations mécaniques et thermiques.

La demande internationale WO2013/110885 enseigne un dispositif d'éclairage à diodes électroluminescentes (LED) dont la lumière passe par la tranche d'un vitrage feuilleté.
Selon l'invention, le bord d'un orifice dans un substrat verrier comprenant une feuille de verre minérale est renforcé par collage sur une face principale du substrat verrier d'une pièce de renfort comprenant une piste de collage pouvant être collée autour de l'orifice. La piste de collage est portée par une partie solide de la pièce de renfort venant en saillie du substrat verrier après collage sur une face principale du substrat verrier. La piste de collage reçoit l'adhésif permettant le collage de la pièce autour de l'orifice. Cette pièce de renfort peut être un disque venant occulter l'orifice lorsqu'il est collé au substrat verrier en saillie de celui-ci. Quand on dit « autour de l'orifice », cela signifie qu'une partie au moins de la piste de collage fait le tour de l'orifice, étant entendu que la surface portant la piste de collage peut venir occulter au moins partiellement l'orifice, ou au contraire, cette surface peut aussi ne pas occulter l'orifice. De l'adhésif en contact avec à la fois la piste de collage et la surface principale du substrat verrier comprenant l'orifice fait donc le tour de l'orifice, soit de façon continue, soit de façon discontinue.

Ainsi, l'invention concerne en premier lieu un vitrage comprenant un substrat verrier comprenant une feuille de verre minéral, ledit substrat verrier comprenant un orifice traversant, une pièce de renfort étant collée sur une face principale dudit substrat verrier par une piste de collage entourant ledit orifice.

Notamment, un module électrique peut être logé à l'intérieur du vitrage vis-à-vis ou dans l'orifice du substrat verrier. La pièce de renfort selon l'invention peut contribuer à maintenir en place ce module électrique. Notamment, la pièce de renfort peut comprendre un logement recevant le module électrique. La pièce de renfort peut comprendre un trou (de forme circulaire ou non circulaire) venant vis-à-vis de l'orifice du substrat verrier à renforcer. Généralement, l'axe du trou de la pièce de renfort coïncide avec l'axe de l'orifice du substrat verrier. Ce trou se trouve dans la surface portant la piste de collage et est entouré de cette piste de collage. Le périmètre du trou de la pièce de renfort peut être plus petit que le périmètre de l'orifice, auquel cas la pièce de renfort occulte une partie de l'orifice. Le périmètre du trou de la pièce de renfort peut être plus grand que l'orifice du substrat verrier auquel cas le trou peut être occulté au moins partiellement par la surface principale du substrat. Pour le cas où la surface principale du substrat occulte au moins partiellement le trou de la pièce de renfort, la distance entre la tranche de l'orifice et la tranche du trou ne dépasse de préférence pas 5 mm. Egalement dans ce cas, il se trouve de préférence au moins une partie de l'adhésif entre le substrat verrier et la piste de collage à l'intérieur du périmètre formé par la ligne située à une distance de 7 mm autour de l'orifice du substrat verrier. Pour le cas où la surface principale du substrat occulte au moins partiellement le trou de la pièce de renfort, le trou de la pièce de renfort entoure généralement l'orifice du substrat verrier.

L'invention concerne les substrats verriers comprenant un orifice dont le bord présente des contraintes de compression de bord internes le renforçant déjà, ou dont le bord ne présente pas de contraintes de compression de bord. La pièce de renfort apporte dans tous les cas une augmentation de la résistance des bords de l'orifice. Le renfort est d'autant plus important que la partie de la pièce de renfort portant la piste de collage est rigide. La partie portant la piste de collage, ainsi que l'intégralité de la pièce de renfort, peut être en un matériau polymère comme un polyamide, notamment le PA 66 GF30 ou le PA 12. La partie de la pièce de renfort portant la piste de collage présente de préférence une épaisseur comprise entre 0,1 et 5 mm et de préférence entre 0,5 et 4 mm.

De préférence, la piste de collage présente les mêmes courbures que la surface du substrat verrier sur laquelle elle doit être collée. Ainsi, si le substrat verrier est bombé à l'endroit de l'orifice, la piste de collage présente de préférence les mêmes courbures pour que la pièce de renfort puisse entrer en contact avec le substrat via la piste de collage sans effort ni déformation. La piste de collage de la pièce de renfort présente un contour extérieur capable d'entourer entièrement l'orifice du substrat verrier. Son périmètre est donc plus grand que celui de l'orifice du substrat verrier. L'orifice dans le substrat verrier peut être de forme circulaire ou ovale ou peut présenter des bords droits en étant sensiblement carré ou rectangulaire, les coins étant dans ces deux derniers cas de préférence arrondis.

La surface de la pièce de renfort portant la piste de collage peut se prolonger parallèlement au substrat verrier vis-à-vis de l'orifice à renforcer et peut donc recouvrir l'arrête définie par la rencontre de la tranche de l'orifice du substrat verrier et de la surface principale du substrat verrier sur laquelle la piste de collage est collée.

L'adhésif appliqué sur la piste de collage et sur le substrat verrier présente une épaisseur comprise entre 0,1 et 5 mm et de préférence entre 0,1 et 1 mm en condition d'utilisation (après éventuel durcissement). L'adhésif peut par exemple être une bande double-face du type cohésif structural par exemple la bande Tape 3M SBT 9270. Les parties assemblées avec cet adhésif sont de préférence pressées l'une contre l'autre, par exemple avec une pression au minimum de 4 kg/m². Avec cet adhésif, le verre ne nécessite aucun traitement de surface particulier (sauf la propreté, bien entendu). Par contre, la piste de collage est de préférence traitée par plasma au préalable. On peut également utiliser comme adhésif une colle HMR (Hot melt reactive) ou une colle PU, bicomposant ou monocomposant comme la Betamat 7112 commercialisé par la société Dow Automotive. Dans ces cas de colle, on applique de préférence un primaire d'accrochage sur le verre devant la recevoir. Ici également, la piste de collage est de préférence traitée par plasma au préalable.

La piste de collage peut être portée par une partie de la pièce de renfort en forme d'anneau dont le trou vient vis-à-vis de l'orifice du substrat verrier.

La pièce de renfort comprend généralement une partie tubulaire dont l'axe est perpendiculaire à la piste de collage. Cette partie tubulaire est de préférence en la même matière que la partie portant la piste de collage. Cette partie portant la piste de collage et la partie tubulaire peuvent être réalisées en même temps par injection d'un matériau polymère dans un moule et sont donc toutes deux « venues de matière » l'une par rapport à l'autre. Cette partie tubulaire donne de la rigidité à la pièce de renfort et contribue à la constitution d'un logement intérieur à la pièce de renfort permettant d'y placer par exemple un module électrique. Cette partie tubulaire peut être de section circulaire ou ovale ou carrée ou rectangulaire. Généralement, la section de la partie tubulaire présente une forme identique en aspect à la forme de la pièce portant la piste de collage, notamment une forme circulaire. Ainsi, la piste de collage peut être portée par une partie en forme d'anneau et la partie tubulaire peut-être reliée à l'anneau en lui étant perpendiculaire, l'axe de la partie tubulaire correspondant à l'axe du trou de l'anneau.

La partie tubulaire peut venir à l'intérieur de l'orifice du substrat verrier lorsque la piste de collage est collée au substrat verrier autour de son orifice. La partie tubulaire peut également rester en saillie du substrat verrier et de la partie (comme un anneau) portant la piste de collage lorsque celle-ci est collée au substrat verrier. La partie tubulaire peut aussi à la fois venir à l'intérieur de l'orifice du substrat verrier et être en saillie du substrat verrier lorsque la piste de collage est collée au substrat verrier. La pièce de renfort peut également comprendre plusieurs parties tubulaires, l'une étant en saillie du substrat verrier, l'autre venant à l'intérieur de l'orifice du substrat verrier lorsque la piste de collage est collée au substrat verrier.

Par substrat verrier, on entend une feuille, bombée ou non, comprenant une seule feuille de verre, recouverte ou non d'une ou plusieurs couches minces (couche anti-solaire ou anti-reflet ou autre) ou une ou plusieurs couches d'émail. Un substrat verrier comprend deux surfaces principales et une tranche. Dans tous les modes de réalisation de l'invention, le substrat verrier comprenant l'orifice dont le bord est à renforcer comprend une feuille de verre minérale, c'est-à-dire comprenant de la silice, généralement plus de 40% en poids de silice. Le bord de l'orifice à renforcer est celui de cette feuille de verre minéral. Il s'agit généralement d'un verre transparent, notamment lorsqu'un rayonnement lumineux doit pouvoir le traverser. Il peut s'agir d'un verre minéral sodo-calcique incolore tel que le verre Planilux® commercialisé par la Demanderesse. Ce substrat verrier percé a généralement une épaisseur comprise entre 1,4 et 6 mm.

Le substrat verrier peut ne pas être associé à un autre substrat verrier. Cependant, il peut aussi être associé à un autre substrat verrier dans un vitrage feuilleté. Un vitrage feuilleté comprend plusieurs substrats verriers séparés par un intercalaire en matériau polymère auquel ils sont collés. Le matériau polymère de l'intercalaire est généralement un polyvinyle de butyral plus communément dénommé « PVB ».

Dans le cas d'un vitrage feuilleté, tous les substrats verriers qu'il contient sont généralement en verre minéral. Dans le cas d'un vitrage automobile, le vitrage feuilleté contient généralement deux feuilles de verre minéral et une feuille de matériau polymère placée entre les deux substrats verriers.

Dans le cas d'un vitrage feuilleté, l'orifice se trouve dans un premier substrat verrier en position externe par rapport au vitrage. Ceci signifie que le premier substrat verrier comprenant l'orifice n'est pas inséré entre deux feuilles de verre du vitrage. L'orifice dans le premier substrat verrier peut se continuer dans un second substrat verrier. Si le vitrage feuilleté comprend deux substrats verriers, l'orifice est donc dans ce cas « traversant » de tout le vitrage feuilleté. Cependant, l'orifice dans un premier substrat verrier peut ne pas être poursuivi dans un second substrat verrier qui lui est accolé par l'intermédiaire de l'intercalaire en matériau polymère, ledit second substrat verrier ne présentant alors pas d'orifice vis-à-vis de celui du premier substrat verrier. Deux cas se présentent alors :
a) l'orifice se poursuit à travers l'intercalaire entre les deux substrats verriers, un évidement étant créé dans l'intercalaire ; dans ce cas, le second substrat verrier constitue le fond du logement dans le vitrage formé en partie par l'orifice du premier substrat verrier ;
b) l'orifice ne se poursuit pas à travers l'intercalaire entre les deux substrats verriers ; dans ce dernier cas, c'est l'intercalaire qui constitue le fond du logement dans le vitrage formé par l'orifice du premier substrat verrier.

Pour le cas où la piste de collage entoure un trou de la pièce de renfort, la pièce de renfort peut aussi comprendre une partie venant en regard dudit trou. Cette partie, dite partie de remplissage, est solidaire de la pièce de renfort directement ou indirectement. Elle peut être en saillie de la piste de collage pour venir se loger dans le logement du vitrage formé en partie par l'orifice du substrat verrier. Cette partie est reliée à au moins deux points de la pièce de renfort, lesdits points se trouvant de part et d'autre du trou et à l'intérieur de la piste de collage, la droite reliant lesdits deux points traversant le trou quand on regarde le trou selon son axe. Le cas échéant, cette partie de remplissage peut être plus ou moins pleine et constituer un véritable fond de la pièce de renfort. Dans le cas d'un vitrage feuilleté, pour le cas où cette partie de remplissage passe par l'orifice du premier substrat verrier pour pouvoir coller la piste de collage, et pour le cas où l'orifice a un fond (soit l'intercalaire en matériau polymère, soit un second substrat verrier), on peut utiliser ce fond pour contribuer à maintenir la pièce de renfort au vitrage feuilleté par un adhésif (comme de la colle) placé entre la partie de remplissage et le fond du logement dans le vitrage formé au moins partiellement par l'orifice du substrat verrier.

Ainsi, la pièce de renfort peut comprendre une partie de remplissage reliant au moins deux points de la pièce de renfort, lesdits deux points se trouvant de part et d'autre du trou et à l'intérieur de la piste de collage, la partie de remplissage étant au moins partiellement vis-à-vis dudit trou, ladite partie de remplissage étant en saillie de la piste de collage et se logeant à l'intérieur du vitrage vis-à-vis ou dans l'orifice du substrat verrier.

Outre sa fonction de renfort de l'orifice du substrat verrier, la pièce de renfort peut aussi avoir une autre fonction. Notamment, elle peut éventuellement être traversée par un conducteur électrique pouvant comprendre un ou plusieurs câbles métalliques conducteurs de courant électrique. Si la pièce de renfort comprend un trou et une partie de remplissage comme précédemment décrit, cette partie de remplissage peut elle-même comprendre un trou pour le passage du conducteur électrique.

La pièce de renfort peut également servir de contenant pour un dispositif électrique, notamment électronique, comme un dispositif d'éclairage, un commutateur électrique, un dispositif détecteur de pluie.

La pièce de renfort peut servir de contenant à un module électrique, notamment un dispositif d'éclairage, notamment à diode électroluminescente (LED). Notamment, les LED peuvent être portées par un circuit électronique disposé à l'intérieur de la pièce de renfort pour que les LED soient placées vis-à-vis de la tranche du substrat verrier muni de l'orifice. La lumière des LED passe par la tranche du substrat verrier et traverse le substrat verrier entre ses deux surfaces principales qui jouent alors le rôle de guide lumière. Cette lumière traversant le substrat verrier peut être redirigée au moins en partie en direction transversale au substrat verrier par un émail extracteur ou un émail réfléchissant disposé sur une surface principale du substrat verrier muni de l'orifice, à une certaine distance de l'orifice. S'il s'agit d'un émail réfléchissant, la lumière arrivant sur l'émail est réfléchie par l'émail et traverse le substrat verrier transversalement à lui. S'il s'agit d'un émail extracteur (ou diffusant), la lumière arrivant sur l'émail traverse l'émail et sort du substrat verrier. Dans le cas d'un émail réfléchissant, si le dispositif d'éclairage est destiné à éclairer ou produire un effet lumineux dans l'habitacle d'un véhicule automobile, on place l'émail réfléchissant sur la face principale du substrat verrier dirigée vers l'extérieur de l'habitacle. Dans le cas d'un émail extracteur, si le dispositif d'éclairage est destiné à éclairer ou produire un effet lumineux dans l'habitacle d'un véhicule automobile, on place l'émail extracteur sur la face principale du substrat verrier dirigée vers l'intérieur de l'habitacle.
Ainsi, le vitrage selon l'invention peut être un vitrage feuilleté, le substrat verrier comprenant l'orifice traversant étant un premier substrat verrier externe, un deuxième substrat verrier lui étant associé au sein du vitrage feuilleté, un intercalaire en matériau polymère séparant les deux substrats verriers. Dans ce cas, le deuxième substrat verrier peut ne pas comprendre d'orifice vis-à-vis de l'orifice du premier substrat verrier. La pièce de renfort peut alors comprendre un trou entouré par la piste de collage, ledit trou venant vis-à-vis de l'orifice du substrat verrier, ladite pièce de renfort comprenant un logement délimité au moins partiellement par le trou, ledit logement recevant un module électrique porteur d'une LED (ce qui recouvre la possibilité qu'il y en ait plusieurs) disposée pour éclairer la tranche de l'orifice du substrat verrier et le cas échéant une LED disposée pour éclairer directement d'un côté extérieur au vitrage. Notamment l'intercalaire en matériau polymère peut comprendre un évidement vis-à-vis de l'orifice du premier substrat verrier, une partie de remplissage reliant au moins deux points de la pièce de renfort de part et d'autre du trou et à l'intérieur de la piste de collage, la partie de remplissage étant au moins partiellement vis-à-vis dudit trou, ladite partie de remplissage étant en saillie de la piste de collage et se logeant à l'intérieur du vitrage et de l'évidement vis-à-vis ou dans l'orifice du substrat verrier. L'invention concerne également un dispositif d'éclairage et de renfort d'un orifice de substrat verrier comprenant une pièce de renfort comprenant un trou entouré d'une piste de collage à coller autour dudit orifice, ladite pièce de renfort comprenant un logement formé au moins en partie par le trou, ledit logement recevant un circuit électronique porteur d'une LED, la LED éclairant la tranche de l'orifice.

La pièce de renfort peut contenir un détecteur de pluie. Dans ce cas, et si la pièce de renfort équipe un vitrage feuilleté percé, alors le PVB vis-à-vis de l'orifice du substrat verrier est de préférence découpé selon un évidemment traversant pour que le détecteur de pluie ne travaille qu'à travers un seul substrat verrier. En effet, un détecteur de pluie est bien efficace à travers un substrat verrier d'un vitrage feuilleté mais beaucoup moins à travers à la fois un substrat verrier et une épaisseur de PVB.

La pièce de renfort peut servir à porter une pièce de finition cachant la zone de l'orifice et le cas échéant le trou de la pièce de renfort, lorsqu'on regarde le substrat verrier du côté de sa face principale sur laquelle la piste de collage est collée. Cette pièce de finition peut porter un commutateur électrique, lequel peut actionner un dispositif électrique contenu dans la pièce de renfort, comme des LED, ou un dispositif électrique situé en dehors de la pièce de renfort.

Pour le cas où le vitrage selon l'invention est un vitrage feuilleté, on peut munir d'un émail noir l'un des substrats verriers ne présentant pas d'orifice en face de l'orifice du substrat verrier équipé de la pièce de renfort, afin de cacher à la vue l'orifice ou la zone de l'orifice du côté du vitrage opposé à celui portant la pièce de renfort. Cela est particulièrement utile lorsque le vitrage est un toit de véhicule automobile puisque la zone de l'orifice ne se voit alors pas de l'extérieur du véhicule à travers le toit.

Pour le cas où le vitrage selon l'invention est un vitrage feuilleté, et que l'intercalaire en matériau polymère comprend un orifice vis-à-vis de l'orifice du substrat verrier muni de la pièce de renfort, on peut placer un film anti-intrusion sur le substrat verrier ne présentant pas d'orifice en face de l'orifice du substrat verrier équipé de la pièce de renfort, ledit film anti-intrusion couvrant la zone rendue plus fragile par les orifices dans le substrat verrier et dans l'intercalaire en matériau polymère. Ce film protège le côté du vitrage portant la pièce de renfort de projections de verre et de matériaux provenant du dispositif porté par la pièce de renfort, en cas de tentative d'effraction par choc sur la zone des orifices du côté du vitrage opposé à celui portant la pièce de renfort. Cela est particulièrement utile lorsque le vitrage est un toit de véhicule automobile.

L'effet renforçant de la pièce de renfort selon l'invention peut être vérifiée par exemple par un test faisant intervenir la chute d'une bille en acier sur le substrat verrier ou le vitrage comprenant le substrat verrier. Ce test de chute de bille est réalisé en faisant chuter la bille sur le substrat verrier ou le vitrage comprenant le substrat verrier du côté opposé à celui de la face principale du substrat verrier sur laquelle la pièce de renfort a été collée. Un test de chute de bille adapté est décrit dans la norme U.N. Régulation R43.

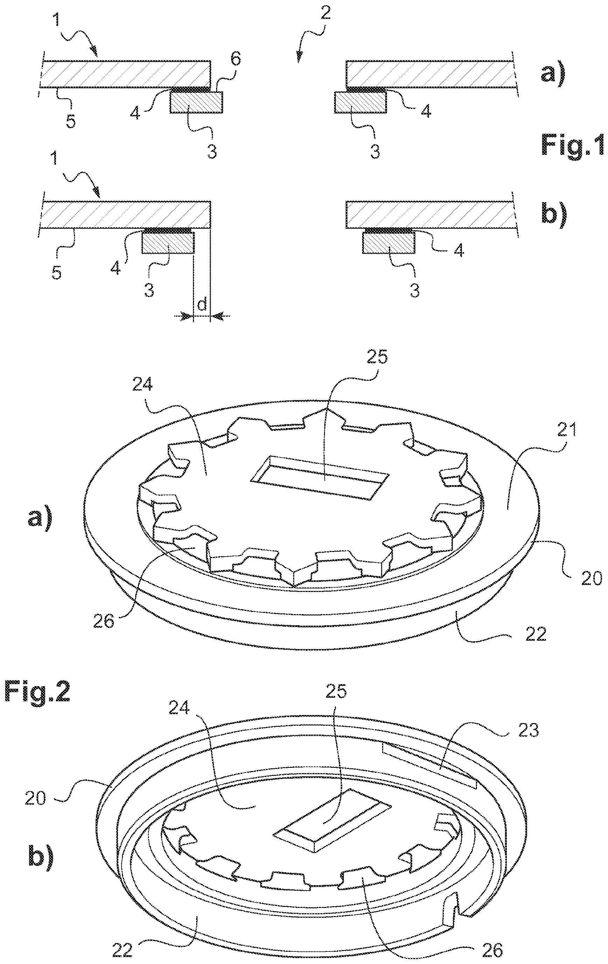

La figure 1 représente un substrat verrier percé d'un orifice renforcé selon l'invention. Un substrat verrier 1 du type feuille de verre minérale comprend un orifice traversant 2. Une pièce de renfort en forme d'anneau 3 est collée par sa piste de collage 6 avec de la colle 4 tout autour de l'orifice 2 sur une face principale 5 du substrat verrier 1. En a), le périmètre du trou de l'anneau est plus petit que celui de l'orifice du substrat verrier et la pièce de renfort occulte donc une partie de l'orifice. Ici, l'orifice du substrat verrier entoure le trou de la pièce de renfort. En b), le périmètre du trou de la pièce de renfort est plus grand que l'orifice du substrat verrier (le trou entoure l'orifice) et c'est le trou de la pièce de renfort qui est occulté partiellement par la surface principale du substrat. Ici, le trou de la pièce de renfort entoure l'orifice du substrat verrier. Dans ce cas de figure, la distance « d » entre la tranche de l'orifice 2 du substrat et la tranche du trou de l'anneau ne dépasse de préférence pas 5 mm.

La figure 2 représente une pièce de renfort pouvant servir à renforcer l'orifice d'un substrat verrier minéral, ladite pièce de renfort étant vue en perspective et de deux côtés différents. Cette pièce de renfort comprend un anneau 20 dont la surface 21 comprend une piste de collage entourant le trou de l'anneau, ladite piste étant destinée à être collée autour de l'orifice du substrat verrier (non représenté). Cette pièce de renfort est munie d'une partie tubulaire 22 dont l'axe est aussi celui de l'anneau. Cette partie tubulaire 22 présente deux rainures 23 (on en voit une seule, l'autre étant identique mais du côté caché de la figure) qui permettent de clipser un couvercle (non représenté) venant cacher toute la pièce de renfort du côté vu sur la figure 2b). Une partie de remplissage 24 relie différent points de l'anneau du côté de sa piste de collage, lesdits points étant à l'intérieur du périmètre de la piste de collage. Cette partie de remplissage 24 comprend un trou 25 pour le passage d'un conducteur électrique (non représenté). La partie de remplissage comprend une pluralité de trous périphériques 26. La partie de remplissage et en saillie par rapport à la piste de collage et peut venir se loger dans le logement formé en partie par l'orifice du substrat verrier. Ainsi, des LED contenues dans la pièce de renfort dans le logement que l'on voit sur la figure 2b) sous la partie de remplissage peuvent envoyer des rayons lumineux à travers les trous périphériques 26 pour impacter directement la tranche de l'orifice dans le substrat verrier et continuer leur progression dans le substrat verrier parallèlement à lui.

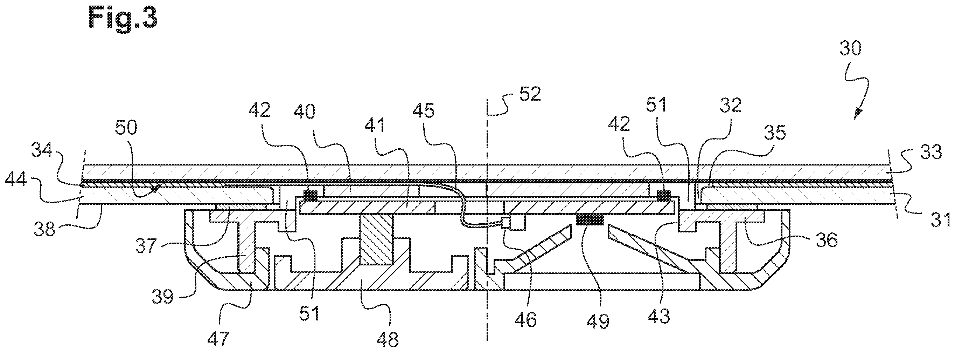

La figure 3 représente un vitrage feuilleté 30 dont un substrat verrier 31 comprend un orifice 32, ledit orifice étant muni d'une pièce de renfort selon l'invention faisant également office de dispositif d'éclairage. Cette pièce de renfort est celle représentée à la figure 2. Le vitrage feuilleté est ici un toit de véhicule automobile. Ce vitrage feuilleté comprend un premier substrat verrier 31 muni d'un orifice 32 et un deuxième substrat verrier 33 sans orifice en regard de l'orifice du premier substrat verrier. Ces deux substrats verriers sont collés ensemble par l'intermédiaire d'un PVB 34 placé entre eux. Le PVB a été découpé pour former un évidement 35 en regard de l'orifice 32 du premier substrat verrier. L'évidement 35 du PVB est un peu plus grand que l'orifice 32 dans le substrat verrier. La pièce de renfort selon l'invention comprend un anneau 36 portant une piste de collage collée par de la colle 37 à la surface principale 38 du substrat verrier percé tournée vers l'intérieur de l'habitacle du véhicule automobile. La pièce de renfort comprend également une partie tubulaire 39 venue de matière avec l'anneau 36 et perpendiculaire à l'anneau, de sorte que l'axe de l'anneau (et donc de son trou) et l'axe de la partie tubulaire coïncident en l'axe 52. Une partie de remplissage 40 reliée à l'anneau 36 se trouve dans le logement formé à la fois par l'orifice 32 dans le substrat verrier et par l'évidement 35 dans le PVB. Cette partie de remplissage est vis-à-vis de l'orifice du substrat verrier et vis-à-vis du trou formé par l'anneau de la pièce de renfort. Elle est en grande partie dans l'orifice du substrat verrier et est logée dans le vitrage. Un circuit électronique 41 portant des LED 42 est contenu dans la pièce de renfort dans le logement formé par le trou 43 de l'anneau et la partie de remplissage 40. La partie de remplissage 40 est en saillie par rapport à la piste de collage de l'anneau 36. Les LED 42 sont exactement à la hauteur de la tranche 44 du premier substrat verrier de sorte que leur lumière passe par cette tranche 44 et se propage dans la tranche parallèlement au substrat verrier. La partie de remplissage 40 est en effet munie de trous périphériques 51 permettant à la lumière des LED de sortir du logement recevant le circuit électronique à l'intérieur de la pièce de renfort, et de pénétrer par la tranche 44 du substrat verrier 31. Un conducteur électrique 45 noyé dans le PVB 34 débouche dans l'évidement 35 du PVB et l'orifice 32 du premier substrat verrier 31 et est connecté par une de ses extrémités 46 au circuit électronique. Une pièce de finition 47 est clipsée sur la pièce de renfort et cache à la vue de l'intérieur de l'habitacle toute la zone de l'orifice y compris la pièce de renfort elle-même. La pièce de finition porte notamment un bouton 48 commandant un commutateur électrique porté par le circuit électronique pour commander l'éclairage. Une LED 49 portée par le dispositif électronique 41 est aussi prévue pour éclairer directement l'intérieur de l'habitacle du véhicule au travers de la pièce de finition 47. Le substrat verrier 33 sans orifice porte sur sa face principale tournée vers le premier substrat verrier 31 un émail noir 50 de façon à cacher la zone de l'orifice 32 à la vue de l'extérieur du véhicule automobile, c'est-à-dire à travers le toit du véhicule et donc à travers le substrat 33.

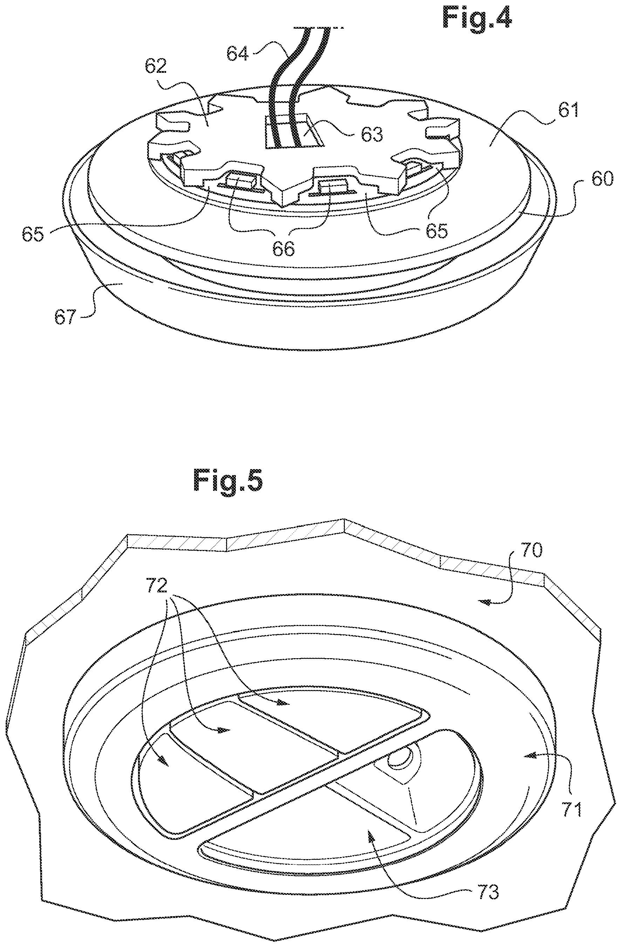

La figure 4 représente la même pièce de renfort que celle des figures 2 et 3. On distingue l'anneau 60 de la pièce de renfort et la piste de collage 61 offrant une surface de collage pour entourer l'orifice du substrat verrier (non représenté) dirigé vers l'intérieur du véhicule automobile. Une partie de remplissage 62 est reliée à la pièce de renfort et est en saillie de la piste de collage pour être logé dans le logement formé au moins partiellement par l'orifice du substrat verrier ainsi que dans l'évidement du PVB. Cette partie de remplissage comprend un trou 63 pour le passage d'un conducteur électrique 64. La partie de remplissage 62 est munie de trous périphériques 65 pour que les LED 66 puissent émettre leur lumière vers la tranche de l'orifice du substrat verrier. On distingue la pièce de finition 67 clipsée sur une partie tubulaire de la pièce de renfort visible de l'habitacle intérieur du véhicule automobile.

La figure 5 est une vue du dispositif d'éclairage contenant la pièce de renfort selon l'invention vue de l'habitacle intérieur d'un véhicule automobile. Ce dispositif est fixé au plafond de l'habitacle intérieur. Ce dispositif comprend les mêmes pièces que celles représentées aux figures 2, 3 et 4. Ce dispositif d'éclairage est fixé par l'intermédiaire de la pièce de renfort selon l'invention au toit 70 du véhicule qui est constitué d'un vitrage feuilleté comprenant un substrat verrier, ledit dispositif comprenant une pièce de finition 71 clipsée sur la pièce de renfort qu'elle cache par ailleurs. Cette pièce de finition comprend trois boutons de commande 72 agissant directement sur des commutateurs électriques fixés sur le circuit électronique contenu dans le logement intérieur (non visible) formé par la pièce de renfort. Une partie de la pièce de finition comprend un verre 73 laissant passer la lumière d'une LED servant à éclairer l'habitacle intérieur du véhicule automobile, ladite LED pouvant être actionnée par l'un des boutons 72.

### EXEMPLES

On compare deux vitrages feuilletés identiques comprenant deux feuilles de verre de 2,1 mm assemblées par une feuille de PVB de 0,76 mm. Un orifice traversant (du vitrage feuilleté) circulaire de 35 mm de diamètre était réalisé sur chaque feuilleté par perçage par foret diamanté. Sur l'un des feuilletés on colle une pièce en polyamide fritté du type anneau avec un rayon intérieur de 35 mm et un rayon extérieur de 45 mm. On soumet les deux vitrages feuilletés placés horizontalement au test dit de sacoche consistant à déposer un sac de 19 kg sur le trou. Le vitrage non renforcé par la pièce en polyamide casse alors que celle renforcée par la pièce en polyamide ne casse pas.

## Revendications

1. Vitrage comprenant un substrat verrier comprenant une feuille de verre (1) minéral, ledit substrat verrier comprenant un orifice traversant (2), **caractérisé en ce qu'**une pièce de renfort (3) est collée sur une face principale dudit substrat verrier par une piste de collage (61) entourant ledit orifice, ladite piste de collage étant collée sur ladite face principale par un adhésif (4) d'épaisseur comprise entre 0,1 et 5 mm.

2. Vitrage selon la revendication précédente, **caractérisé en ce que** la pièce de renfort comprend un trou entouré par la piste de collage, ledit trou se trouvant vis-à-vis de l'orifice.

3. Vitrage selon la revendication précédente, **caractérisé en ce que** la pièce de renfort comprend une partie de remplissage (62) reliant au moins deux points de la pièce de renfort, lesdits deux points se trouvant de part et d'autre du trou et à l'intérieur de la piste de collage, la partie de remplissage étant au moins partiellement vis-à-vis dudit trou, ladite partie de remplissage étant en saillie de la piste de collage et se logeant à l'intérieur du vitrage vis-à-vis ou dans l'orifice du substrat verrier.

4. Vitrage selon l'une des deux revendications précédentes **caractérisé en ce que** le trou de la pièce de renfort entoure l'orifice, la distance entre la tranche de l'orifice et la tranche du trou ne dépassant pas 5 mm.

5. Vitrage selon l'une des revendications précédentes, **caractérisé en ce que** la pièce de renfort comprend une partie tubulaire (39) dont l'axe est perpendiculaire à la piste de collage.

6. Vitrage selon l'une des revendications précédentes, **caractérisé en ce qu'**un module électrique est logé à l'intérieur du vitrage vis-à-vis ou dans l'orifice du substrat verrier.

7. Vitrage selon la revendication précédente, **caractérisé en ce que** le module électrique porte une LED (42) disposée pour éclairer la tranche de l'orifice du substrat verrier.

8. Vitrage selon l'une des deux revendications précédentes, **caractérisé en ce que** la pièce de renfort comprend un logement recevant le module électrique.

9. Vitrage selon l'une des revendications précédentes, **caractérisé en ce que** le substrat verrier est le seul substrat verrier du vitrage.

10. Vitrage selon l'une des revendications 1 à 8, **caractérisé en ce qu'**il est un vitrage feuilleté, le substrat verrier comprenant l'orifice traversant étant un premier substrat verrier en position externe par rapport au vitrage, un deuxième substrat verrier lui étant associé au sein du vitrage feuilleté, un intercalaire en matériau polymère séparant les deux substrats verriers.

11. Vitrage selon la revendication précédente, **caractérisé en ce que** le deuxième substrat verrier ne comprend pas d'orifice vis-à-vis de l'orifice du premier substrat verrier, la pièce de renfort étant portée sur le côté du vitrage comprenant l'orifice traversant.

12. Vitrage selon la revendication précédente, **caractérisé en ce que** la pièce de renfort comprend un trou entouré par la piste de collage, ledit trou venant vis-à-vis de l'orifice, ladite pièce de renfort comprenant un logement délimité au moins partiellement par le trou, ledit logement recevant un module électrique porteur d'une LED disposée pour éclairer la tranche de l'orifice du substrat verrier et le cas échéant une LED disposée pour éclairer directement d'un côté extérieur au vitrage.

13. Vitrage selon la revendication 10 à 12, **caractérisé en ce que** l'intercalaire en matériau polymère ne comprend pas d'évidement vis-à-vis de l'orifice du premier substrat verrier.

14. Vitrage selon la revendication 10 à 12, **caractérisé en ce que** l'intercalaire en matériau polymère comprend un évidement vis-à-vis de l'orifice du premier substrat verrier.

15. Vitrage selon la revendication précédente, **caractérisé en ce qu'**une partie de remplissage relie au moins deux points de la pièce de renfort de part et d'autre du trou et à l'intérieur de la piste de collage, la partie de remplissage étant au moins partiellement vis-à-vis dudit trou, ladite partie de remplissage étant en saillie de la piste de collage et se logeant à l'intérieur du vitrage et de l'évidement dans l'intercalaire en matériau polymère vis-à-vis de l'orifice du premier substrat verrier.

16. Vitrage selon l'une des revendications 10 à 15, **caractérisé en ce qu'**il est un vitrage feuilleté automobile, notamment un toit de véhicule automobile.

17. Vitrage selon l'une des revendications précédentes, **caractérisé en ce que** la piste de collage de la pièce de renfort est collée sur la face principale du substrat verrier par un adhésif d'épaisseur comprise entre 0,1 et 1 mm.

## Patentansprüche

1. Verglasung, umfassend ein Glassubstrat, das eine mineralische Glasscheibe (1) umfasst, wobei das Glassubstrat ein Durchgangsloch (2) umfasst, **dadurch gekennzeichnet, dass** ein Verstärkungsteil (3) auf eine Hauptseite des Glassubstrats durch eine Klebespur (61), die das Loch umgibt, geklebt wird, wobei die Klebespur auf die Hauptseite durch einen Klebstoff (4) mit einer Dicke zwischen 0,1 und 5 mm geklebt wird.

2. Verglasung nach dem vorstehenden Anspruch, **dadurch gekennzeichnet, dass** das Verstärkungsteil eine Öffnung umfasst, die von der Klebespur umgeben ist, wobei die Öffnung dem Loch zugewandt ist.

3. Verglasung nach dem vorstehenden Anspruch, **dadurch gekennzeichnet, dass** das Verstärkungsteil ein Füllelement (62) umfasst, das mindestens zwei Stellen des Verstärkungsteils verbindet, wobei die zwei Stellen sich auf beiden Seiten der Öffnung und in der Klebespur befinden, wobei das Füllelement mindestens teilweise dem Loch zugewandt ist, wobei das Füllelement von der Klebespur hervorsteht und in der Verglasung dem Loch des Glassubstrats zugewandt oder in diesem eingesetzt ist.

4. Verglasung nach einem der zwei vorstehenden Ansprüche, **dadurch gekennzeichnet, dass** die Öffnung des Verstärkungsteils das Loch umgibt, wobei der Abstand zwischen dem Rand des Lochs und dem Rand der Öffnung 5 mm nicht überschreitet.

5. Verglasung nach einem der vorstehenden Ansprüche, **dadurch gekennzeichnet, dass** das Verstärkungsteil ein Rohrelement (39) umfasst, dessen Achse senkrecht zur Klebespur ist.

6. Verglasung nach einem der vorstehenden Ansprüche, **dadurch gekennzeichnet, dass** ein elektrisches Modul in der Verglasung dem Loch des Glassubstrats zugewandt oder in diesem eingesetzt ist.

7. Verglasung nach dem vorstehenden Anspruch, **dadurch gekennzeichnet, dass** das elektrische Modul eine LED (42) aufweist, die angeordnet ist, um die Tranche des Lochs des Glassubstrats zu beleuchten.

8. Verglasung nach einem der zwei vorstehenden Ansprüche, **dadurch gekennzeichnet, dass** das Verstärkungsteil eine Aufnahme zum Aufnehmen des elektrischen Moduls umfasst.

9. Verglasung nach einem der vorstehenden Ansprüche, **dadurch gekennzeichnet, dass** das Glassubstrat das einzige Glassubstrat der Verglasung ist.

10. Verglasung nach einem der Ansprüche 1 bis 8, **dadurch gekennzeichnet, dass** sie eine Verbundverglasung ist, wobei das Glassubstrat, das ein Durchgangsloch umfasst, ein erstes Glassubstrat an einer äußeren Position in Bezug auf die Verglasung ist, wobei ein zweites Glassubstrat diesem innerhalb der Verbundverglasung zugeordnet ist, wobei eine Zwischenschicht aus einem Polymermaterial die zwei Glassubstrate trennt.

11. Verglasung nach dem vorstehenden Anspruch, **dadurch gekennzeichnet, dass** das zweite Glassubstrat kein Loch umfasst, das dem Loch des ersten Glassubstrats zugewandt ist, wobei das Verstärkungsteil auf der Seite der Verglasung angebracht ist, die das Durchgangsloch umfasst.

12. Verglasung nach dem vorstehenden Anspruch, **dadurch gekennzeichnet, dass** das Verstärkungsteil eine Öffnung umfasst, die von der Klebespur umgeben ist, wobei die Öffnung dem Loch gegenüber liegt, wobei das Verstärkungsteil eine Aufnahme umfasst, die mindestens teilweise durch die Öffnung verkleinert wird, wobei die Aufnahme ein elektrisches Modul mit einer LED aufnimmt, die angeordnet ist, um die Tranche des Lochs des Glassubstrats zu beleuchten, und gegebenenfalls eine LED aufnimmt, die angeordnet ist, um direkt eine Seite außerhalb der Verglasung zu beleuchten.

13. Verglasung nach Ansprüchen 10 bis 12, **dadurch gekennzeichnet, dass** die Zwischenschicht aus Polymermaterial keine Aussparung umfasst, die dem Loch des ersten Glassubstrats gegenüber liegt.

14. Verglasung nach Ansprüchen 10 bis 12, **dadurch gekennzeichnet, dass** die Zwischenschicht aus Polymermaterial eine Aussparung umfasst, die dem Loch des ersten Glassubstrats gegenüber liegt.

15. Verglasung nach dem vorstehenden Anspruch, **dadurch gekennzeichnet, dass** ein Füllelement mindestens zwei Stellen des Verstärkungsteils auf beiden Seiten der Öffnung und in der Klebespur verbindet, wobei das Füllelement mindestens teilweise der Öffnung zugewandt ist, wobei das Füllelement von der Klebespur hervorsteht und in der Verglasung und der Aussparung in der Zwischenschicht aus Polymermaterial, die dem Loch des ersten Glassubstrats gegenüber liegt, eingesetzt ist.

16. Verglasung nach einem der Ansprüche 10 bis 15, **dadurch gekennzeichnet, dass** sie eine Automobil-Verbundverglasung ist, insbesondere ein Dach eines Kraftfahrzeugs.

17. Verglasung nach einem der vorstehenden Ansprüche, **dadurch gekennzeichnet, dass** die Klebespur des Verstärkungsteils auf die Hauptseite des Glassubstrats durch einen Klebstoff mit einer Dicke zwischen 0,1 und 1 mm geklebt wird.

## Claims

1. A glazing unit comprising a glass substrate comprising a mineral glass sheet (1), said glass substrate comprising a through opening (2), **characterized in that** a reinforcing piece (3) is bonded onto a main face of said glass substrate by means of a bonding track (61) surrounding said opening, said bonding track being bonded onto the said main face by means of an adhesive (4) having a thickness in the range from 0.1 to 5 mm.

2. The glazing unit as claimed in the preceding claim, **characterized in that** the reinforcing piece comprises a hole surrounded by the bonding track, said hole being located facing the opening.

3. The glazing unit as claimed in the preceding claim, **characterized in that** the reinforcing piece comprises a filler part (62) connecting at least two points on the reinforcing piece, said two points being located on either side of the hole and within the bonding track, the filler part at least partially facing said hole, said filler part projecting from the bonding track and being housed within the glazing unit facing, or within the opening of, the glass substrate.

4. The glazing unit as claimed in one of the two preceding claims, **characterized in that** the hole in the reinforcing piece surrounds the opening, the distance between the edge face of the opening and the edge face of the hole not exceeding 5 mm.

5. The glazing unit as claimed in any of the preceding claims, **characterized in that** the reinforcing piece comprises a tubular part (39) whose axis is perpendicular to the bonding track.

6. The glazing unit as claimed in any of the preceding claims, **characterized in that** an electrical module is housed inside the glazing unit, facing, or within the opening of, the glass substrate.

7. The glazing unit as claimed in the preceding claim, **characterized in that** the electrical module carries an LED (42) positioned so as to illuminate the edge face of the opening of the glass substrate.

8. The glazing unit as claimed in one of the two preceding claims, **characterized in that** the reinforcing piece comprises a housing receiving the electrical module.

9. The glazing unit as claimed in any of the preceding claims, **characterized in that** the glass substrate is the sole glass substrate in the glazing unit.

10. The glazing unit according to any one claims 1 to 8, **characterized in that** it is a laminated glazing unit, the glass substrate comprising the through opening being a first glass substrate in an outer position with respect to the glazing unit, a second glass substrate being associated with it in the laminated glazing unit, and the two glass substrates being separated by an interlayer of polymer material.

11. The glazing unit as claimed in the preceding claim, **characterized in that** the second glass substrate does not comprise an opening facing the opening of the first glass substrate, the reinforcing piece being carried on the side of the glazing unit comprising the through opening.

12. The glazing unit as claimed in the preceding claim, **characterized in that** the reinforcing piece comprises a hole surrounded by the bonding track, said hole being made to face the opening, said reinforcing piece comprising a housing delimited at least partially by the hole, said housing receiving an electrical module carrying an LED positioned to illuminate the edge face of the opening of the glass substrate, and, if necessary, an LED positioned to provide direct illumination from a side external to the glazing unit.

13. The glazing unit as claimed in either of claims 10 to 12, **characterized in that** the interlayer of polymer material is free of void facing the opening of the first glass substrate.

14. The glazing unit as claimed in either of claims 10 to 12, **characterized in that** the interlayer of polymer material comprises a void facing the opening of the first glass substrate.

15. The glazing unit as claimed in of the preceding claim, **characterized in that**, a filler part connecting at least two points on the reinforcing piece on either side of the hole and within the bonding track, the filler part at least partially facing said hole, said filler part projecting from the bonding track and being housed facing or within the opening of the glass substrate, within the glazing unit and eventually within the void in the interlayer of polymer material facing the opening of the first glass substrate.

16. The glazing unit as claimed in any of the claims 10 to 15, **characterized in that** it is a laminated glazing unit for a motor vehicle, notably a roof of a motor vehicle.

17. The glazing unit as claimed in any of the preceding claims, **characterized in that** the bonding track of the reinforcing piece is bonded onto the main face of the glass substrate by means of an adhesive having a thickness in the range from 0.1 to 1 mm.
